# EUROPÄISCHE PATENTSCHRIFT

(11) **EP 0 691 382 B1**
(45) Veröffentlichungstag und Bekanntmachung des Hinweises auf die Patenterteilung: **29.12.1997**
(21) Anmeldenummer: 95109963.9
(22) Anmeldetag: 27.06.1995
(51) Int. Cl.: C09B 23/06, C09B 23/00, G02F 1/35, C08K 5/47, G03G 9/09, B41M 5/38

(54) **Thiazolmethinfarbstoffe**
Thiazolomethine dyes
Colorants thiazolométhiniques

(30) Priorität: 05.07.1994 DE 4423485
(43) Veröffentlichungstag der Anmeldung: 10.01.1996
(73) Patentinhaber: BASF AKTIENGESELLSCHAFT, 67056 Ludwigshafen (DE)
(72) Erfinder: Beckmann, Stefan, Dr., D-67098 Bad Dürkheim (DE); Etzbach, Karl-Heinz, Dr., D-67227 Frankenthal (DE); Sens, Rüdiger, Dr., D-68165 Mannheim (DE)

(56) Entgegenhaltungen:
- EP-A- 0 416 434
- EP-A- 0 572 898
- PATENT ABSTRACTS OF JAPAN vol. 013 no. 221 (C-598) ,23.Mai 1989 & JP-A-01 031868 (SUMITOMO CHEM CO LTD) 2.Februar 1989,

## Beschreibung

Die vorliegende Erfindung betrifft neue Thiazolmethinfarbstoffe der Formel I 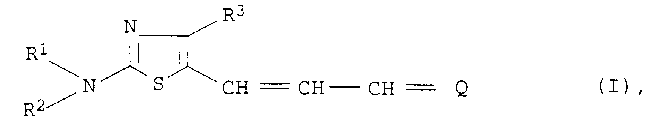 in der
R¹ und R² unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,
R³ für Wasserstoff, Halogen, C₁-C₈-Alkyl, gegebenenfalls substituiertes Phenyl, gegebenenfalls substituiertes Benzyl, Cyclohexyl, Thienyl, Hydroxy oder C₁-C₈-Monoalkylamino und
Q für den Rest einer CH-aciden Verbindung stehen,
ausgenommen der Verbindung der Formel 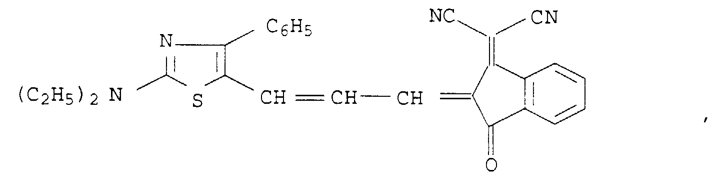 sowie die Verwendung der Thiazolmethinfarbstoffe in der nichtlinearen Optik.

Die JP-A 1 031 868 offenbart eine Thiazolmethinverbindung als Pigment für optische Informationsaufzeichnungsmedien.

Ferner beschreibt die EP-A 0 572 898 Polymerisate für die nichtlineare Optik, deren Monomere sich von Thiazolmethinanilinfarbstoffen ableiten.

Aufgabe der vorliegenden Erfindung war es, neue Methinfarbstoffe auf Basis von Thiazolen bereitzustellen, die sich vorteilhaft für die Anwendung in polymeren nichtlinear optischen Systemen eignen. Insbesondere sollten solche Farbstoffe große Hyperpolarisierbarkeitswerte, eine gute thermische Stabilität, gute Verträglichkeit mit den in nichtlinear optischen Systemen zur Anwendung kommenden Polymeren sowie gute Filmbildungseigenschaften mit Copolymeren aufweisen.

Demgemäß wurden die eingangs näher bezeichneten Thiazolmethinfarbstoffe der Formel I gefunden.

Wenn Q in Formel I einen Rest einer CH-aciden Verbindung bedeutet, so kann sich dieser Rest z.B. von Nitromethan, Nitroethan oder von Verbindungen der Formeln IIa bis IIi 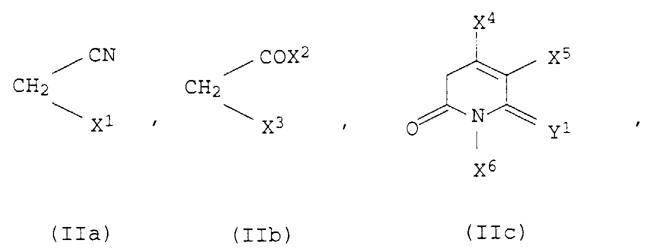 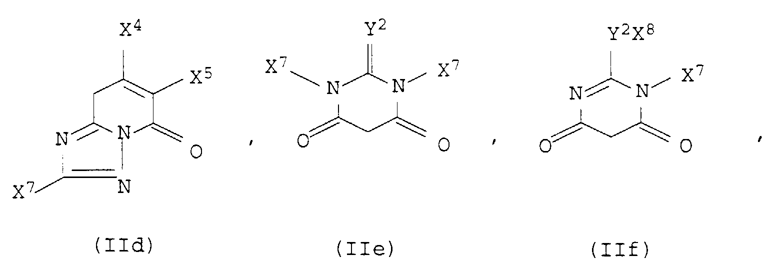 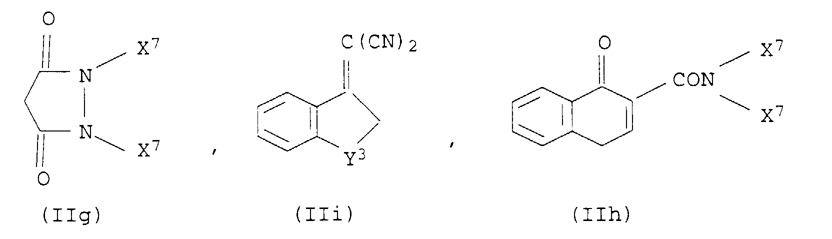 ableiten, wobei
- Y¹: Sauerstoff oder einen Rest der Formel C(CN)₂,
- Y²: Sauerstoff oder Schwefel,
- Y³: Sulfonyl oder einen Rest der Formel C(CN)₂,
- X¹: Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, Phenoxycarbonyl, Carbamoyl, C₁-C₄-Mono- oder Dialkylcarbamoyl, gegegebenenfalls substituiertes Phenylcarbamoyl oder gegebenenfalls substituiertes Phenyl,
- X²: C₁-C₆-Alkyl oder C₁-C₆-Alkoxy,
- X³: C₁-C₄-Alkoxycarbonyl oder Phenylcarbamoyl,
- X⁴: Wasserstoff oder C₁-C₆-Alkyl,
- X⁵: Cyano, Carbamoyl, C₁-C₄-Alkoxycarbonyl oder Acetyl,
- X⁶: Wasserstoff, C₁-C₈-Alkyl, Amino, C₁-C₆-Mono- oder Dialkylamino, C₁-C₄-Monoalkanoylamino, Benzoylamino oder N-(C₁-C₄-Alkanoyl)-N-benzoylamino,
- X⁷: Wasserstoff, C₁-C₈-Alkyl, Benzyl oder Phenyl und
- X⁸: C₁-C₈-Alkyl bedeuten.

Alle in den obengenannten Formeln auftretenden Alkylgruppen können sowohl geradkettig als auch verzweigt sein.

Wenn in den obengenannten Formeln substituierte Alkylgruppen auftreten, so können als Substituenten z.B. Cyano, Phenyl, Tolyl, Hydroxy, C₁-C₆-Alkanoyloxy, Acryloyloxy, Methacryloyloxy, C₁-C₄-Alkoxycarbonyl oder C₁-C₄-Alkoxycarbonyloxy, wobei im letzten Fall die Alkoxygruppe durch Phenyl oder C₁-C₄-Alkoxy substituiert sein kann, in Betracht kommen. Die Alkylgruppen weisen in der Regel dann 1 bis 3, vorzugsweise 1 oder 2 Substituenten auf.

Wenn in den obengenannten Formeln substituierte Phenylgruppen auftreten, so können als Substituenten z.B. C₁-C₄-Alkyl, C₁-C₄-Alkoxy, Amino, Hydroxy, Halogen oder Nitro in Betracht kommen. Die Phenylgruppen weisen in der Regel dann 1 bis 3, vorzugsweise 1 oder 2 Substituenten auf.

R¹, R², R³, X², X⁴, X⁶, X⁷ und X⁸ sind z.B. Methyl, Ethyl, Propyl, Isopropyl, Butyl, Isobutyl, sec-Butyl, tert-Butyl, Pentyl, Isopentyl, Neopentyl, tert-Pentyl, Hexyl oder 2-Methylpentyl.

Reste R¹, R², R³, X⁶, X⁷ und X⁸ sind weiterhin z.B. Heptyl, Octyl, Isooctyl oder Ethylhexyl.

Reste R¹ und R² sind weiterhin z.B. 2-Methoxyethyl, 2- oder 3-Methoxypropyl, 2-Ethoxyethyl, 2- oder 3-Ethoxypropyl, 2-Propoxyethyl, 2- oder 3-Propoxypropyl, 2-Butoxyethyl, 2- oder 3-Butoxypropyl, 3,6-Dioxaheptyl, 3,6-Dioxaoctyl, 2-Hydroxyethyl, 2- oder 3-Hydroxypropyl, 2- oder 4-Hydroxybutyl, 5-Hydroxypentyl, 6-Hydroxyhexyl, 7-Hydroxyheptyl, 8-Hydroxyoctyl, 2-Cyanoethyl, 2- oder 3-Cyanopropyl, 2-Acetyloxyethyl, 2- oder 3-Acetyloxypropyl, 2-Isobutyryloxyethyl, 2- oder 3-Isobutyryloxypropyl, 2-Acryloyloxyethyl, 2-Methacryloyloxyethyl, 2- der 3-Acryloyloxypropyl, 2- oder 3-Methacryloyloxypropyl, 2- oder 4-Acryloyloxybutyl, 2- oder 4-Methacryloyloxybutyl, 5-Acryloyloxypentyl, 5-Methacryloxypentyl, 6-Acryloyloxyhexyl, 6-Methacryloyloxyhexyl, 7-Acryloyloxyheptyl, 7-Methacryloyloxyheptyl, 8-Acryloyloxyoctyl, 8-Methacryloyloxyoctyl, 2-Methoxycarbonylethyl, 2- oder 3-Methoxycarbonylpropyl, 2-Ethoxycarbonylethyl, 2- oder 3-Ethoxycarbonylpropyl 2-Methoxycarbonyloxyethyl, 2- oder 3-Methoxycarbonyloxypropyl, 2-Ethoxycarbonyloxyethyl, 2- oder 3-Ethoxycarbonyloxypropyl, 2-Butoxycarbonyloxyethyl, 2- oder 3-Butoxycarbonyloxypropyl, 2-(2-Phenylethoxycarbonyloxy)ethyl, 2- oder 3-(2-Phenylethoxycarbonyloxy)propyl, 2-(2-Ethoxyethoxycarbonyloxy)ethyl, 2- oder 3-(2-Ethoxyethoxycarbonyloxy)propyl, Benzyl, 2-Methylbenzyl, 1- oder 2-Phenylethyl, Cyclopentyl, Cyclohexyl, Cycloheptyl, 2-, 3- oder 4-Methylphenyl, Allyl oder Methallyl.

Reste R³ sind weiterhin z.B. Fluor, Chlor, Brom, Phenyl, 2-Methylphenyl, 2,4-Dimethylphenyl, 2-Methoxyphenyl, 2,4-Dimethoxyphenyl, Benzyl, 2-Methylbenzyl, 2,4-Dimethylbenzyl, 2-Methoxybenzyl, 2,4-Dimethoxybenzyl, Methylamino, Ethylamino, Propylamino, Isopropylamino, Butylamino, Pentylamino, Hexylamino, Heptylamino, Octylamino oder 2-Ethylhexylamino.

Wenn R¹ und R² zusammen mit dem sie verbindenden Stickstoffatom einen fünf- oder sechsgliedrigen gesättigten heterocyclischen Rest, der gegebenenfalls weitere Heteroatome aufweist, bedeuten, so können dafür z.B. Pyrrolidinyl, Piperidinyl, Morpholinyl, Piperazinyl oder N-(C₁-C₄-Alkyl)-piperazinyl in Betracht kommen.

Reste X¹, X³ und X⁴ sind z.B. Methoxycarbonyl, Ethoxycarbonyl, Propoxycarbonyl, Isopropoxycarbonyl oder Butoxycarbonyl.

Reste X¹ sind weiterhin z.B. Formyl, Acetyl, Propionyl, Butyryl, Isobutyryl, Benzoyl, 2-, 3- oder 4-Methylbenzoyl, 2-, 3- oder 4-Methoxybenzoyl, Methylsulfonyl, Ethylsulfonyl, Propylsulfonyl, Isopropylsulfonyl, Butylsulfonyl, Phenylsulfonyl, 2-, 3- oder 4-Methylphenylsulfonyl, 2-, 3- oder 4-Methoxyphenylsulfonyl, 2-, 3- oder 4-Chlorphenylsulfonyl, Mono- oder Dimethylcarbamoyl, Mono- oder Diethylcarbamoyl, Mono- oder Dipropylcarbamoyl, Mono- oder Diisopropylcarbamoyl, Mono- oder Dibutylcarbamoyl, N-Methyl-N-ethylcarbamoyl, Phenylcarbamoyl, 2-, 3- oder 4-Methylphenylcarbamoyl, 2-, 3- oder 4-Methoxyphenylcarbamoyl, Phenyl, 2-, 3- oder 4-Methylphenyl, 2-, 3- oder 4-Ethylphenyl, 2-, 3- oder 4-Propylphenyl, 2-, 3- oder 4-Isopropylphenyl, 2-, 3- oder 4-Butylphenyl, 2,4-Dimethylphenyl, 2-, 3- oder 4-Methoxyphenyl, 2-, 3- oder 4-Ethoxyphenyl, 2-, 3- oder 4-Isobutoxyphenyl, 2,4-Dimethoxyphenyl, 2-, 3- oder 4-Chlorphenyl, 2,4-Dichlorphenyl, 2-, 3- oder 4-Nitrophenyl, 2-, 3- oder 4-Hydroxyphenyl oder 2-, 3- oder 4-Aminophenyl.

Reste X² sind weiterhin z.B. Methoxy, Ethoxy, Propoxy, Isopropoxy, Butoxy, Isobutoxy, sec-Butoxy, tert-Butoxy, Pentyloxy, Isopentyloxy, Neopentyloxy, tert-Pentyloxy oder Hexyloxy.

Reste X⁶ sind weiterhin z.B. Mono- oder Dimethylamino, Mono- oder Diethylamino, Mono- oder Dipropylamino, Mono- oder Diisopropylamino, Mono- oder Dibutylamino, Mono- oder Dipentylamino, Mono- oder Dihexylamino, N-Methyl-N-ethylamino, Formylamino, Acetylamino, Propionylamino, Butyrylamino, Isobutyrylamino oder N-Acetyl-N-benzoylamino.

Bevorzugt sind Thiazolmethinfarbstoffe der Formel I, in der R¹ und R² unabhängig voneinander jeweils für C₁-C₆-Alkyl oder durch Hydroxy, Acryloyloxy oder Methacryloyloxy substituiertes C₂-C₆-Alkyl stehen.

Bevorzugt sind weiterhin Thiazolmethinfarbstoffe der Formel I, in der R³ für C₁-C₆-Alkyl oder gegebenenfalls substituiertes Phenyl steht, wobei C₁-C₆-Alkyl, Phenyl, Hydroxyphenyl oder Aminophenyl besonders hervorzuheben sind.

Besonders bevorzugt sind Thiazolmethinfarbstoffe der Formel I, in der R³ für C₁-C₆-Alkyl oder Phenyl steht.

Besonders bevorzugt sind weiterhin Thiazolmethinfarbstoffe der Formel I, in der Q sich von einer Verbindung der Formel IIc, IIe oder IIg ableitet.

Ganz besonders bevorzugt sind Thiazolmethinfarbstoffe der Formel I, in der Q sich von einer Verbindung der Formel IIc, IIe oder IIg ableitet, wobei Y¹ und Y² jeweils Sauerstoff, X⁴ Methyl, X⁵ Cyano, X⁶ C₁-C₆-Alkyl, Acetylamino oder N-Acetyl-N-benzoylamino und X⁷ C₁-C₆-Alkyl, Benzyl oder Phenyl bedeuten.

Die Herstellung der Thiazolmethinfarbstoffe der Formel I kann nach an sich bekannten Methoden erfolgen. Beispielsweise kann man einen Aldehyd der Formel III 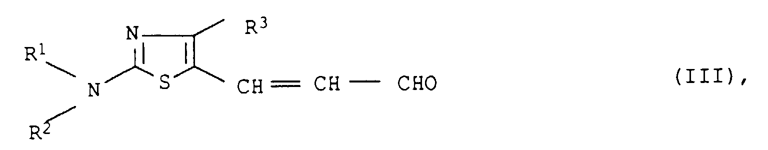 in der R¹, R² und R³ jeweils die obengenannte Bedeutung besitzen, mit einer CH-aciden Verbindung der Formel IV

H₂Q (IV),

in der Q die obengenannte Bedeutung besitzt, kondensieren.

Die Herstellung der Aldehyde der Formel III ist z.B. in der älteren deutschen Patentanmeldung P 44 01 912.2 (WO 95/20181) beschrieben.

Die Thiazolmethinfarbstoffe der Formel I 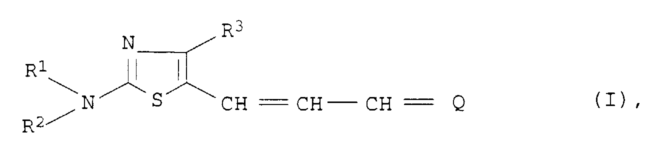 in der
R¹ und R² unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,
R³ für Wasserstoff, Halogen, C₁-C₈-Alkyl, gegebenenfalls substituiertes Phenyl, gegebenenfalls substituiertes Benzyl, Cyclohexyl, Thienyl, Hydroxy oder C₁-C₈-Monoalkylamino und
Q für den Rest einer CH-aciden Verbindung stehen,
eignen sich vorteilhaft zur Anwendung in der nichtlinearen Optik.

Die erfindungsgemäßen Verbindungen sind thermisch stabil und verfügen über besonders große molekulare Hyperpolarisierbarkeitswerte (β₀). Außerdem weisen die Farbstoffe eine gute Verträglichkeit mit den in nichtlinear optischen Systemen zur Anwendung kommenden Polymeren sowie gute Filmbildungseigenschaften in Copolymeren auf.

Die Bestimmung der molekularen Hyperpolarisierbarkeit kann z.B. nach der Solvatochromiemeßmethode (siehe beispielsweise Z. Naturforschung, Band 20a, Seite 1441 bis 1471, 1965, oder J. Org. Chem., Band 54, Seite 3775 bis 3778, 1989) erfolgen. Man bestimmt dabei die Lage der Absorptionsbande einer Verbindung in verschiedenen Lösungsmitteln, z.B. in Dioxan oder Dimethylsulfoxid. Die Verschiebung der Absorptionsbande ist dann direkt proportional dem β₀-Wert, d.h. Verbindungen mit großer solvatochromer Verschiebung weisen eine große molekulare Hyperpolarisierbarkeit auf und eignen sich daher gut für die Anwendung in nichtlinear optischen Systemen (siehe beispielsweise Chemistry and Industry, 1990, Seiten 600 bis 608).

Insbesondere ist hierbei die Eignung der neuen Stoffe in der Nachrichtentechnik, in elektrooptischen Modulatoren (z.B. Mach-Zehnder-Inferometer), in optischen Schaltern, bei der Frequenzmischung oder in Wellenleitern hervorzuheben.

Die neuen Thiazolmethinfarbstoffe der Formel I eignen sich weiterhin in vorteilhafter Weise z.B. zum Färben oder Bedrucken von textilen Materialien. Dies sind beispielsweise Fasern oder Gewebe, insbesondere aus Polyestern, daneben auch aus Celluloseestern oder Polyamiden, oder Mischgewebe aus Polyestern und Cellulosefasern oder Wolle.

Des weiteren sind die neuen Thiazolmethinfarbstoffe der Formel I vorteilhaft geeignet zum Färben von Polymeren in der Masse, zur Anwendung in der Elektrophotographie als Farbstoffe für elektrostatische Toner oder als Farbstoffe für den thermischen Transfer.

Die folgenden Beispiele sollen die Erfindung näher erläutern.

### Beispiel 1

0,01 mol der Verbindung der Formel 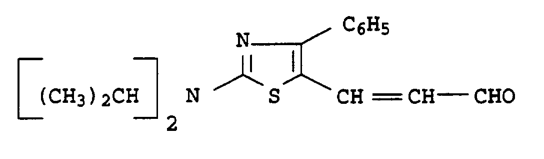 und 2,32 g (0,01 mol) N,N'-Diphenylbarbitursäure wurden mit 0,35 g Natriumacetat und 20 ml Acetanhydrid für 2 h auf 80°C erhitzt. Nach dem Erkalten auf 20°C saugte man ab, wusch den Niederschlag mit wenig Methanol und trocknete ihn bei 50°C unter vermindertem Druck. Man erhielt 1,68 g der Verbindung der Formel 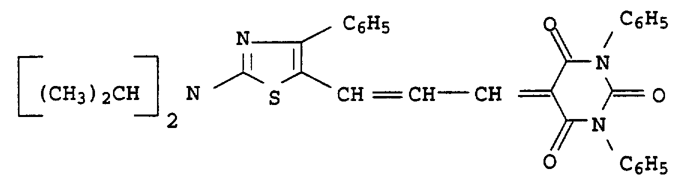 Fp.: 235°C

### Beispiel 2

0,01 mol der Verbindung der Formel 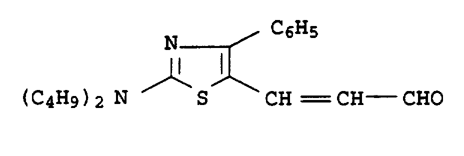 und 1,64 g (0,01 mol) der Verbindung der Formel 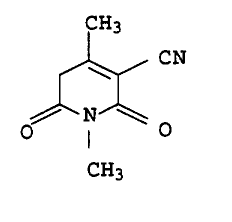 wurden mit 0,35 g Natriumacetat und 18 mol Acetanhydrid für 2 h auf 80°C erhitzt. Der nach dem Abkühlen auf 20°C entstandene Niederschlag wurde abgesaugt, mit wenig Methanol gewaschen und unter vermindertem Druck bei 50°C getrocknet. Man erhielt 1,65 g der Verbindung der Formel 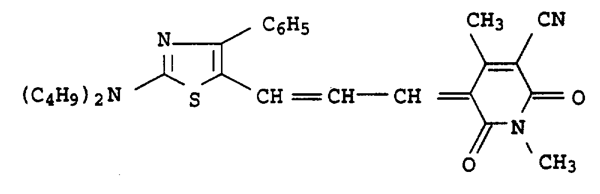 Fp.: 220°C

### Beispiel 3

0,01 mol der Verbindung der Formel 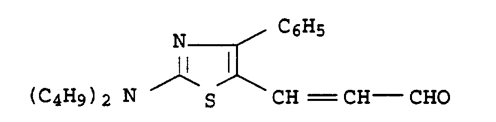 und 0,01 mol der verbindung der Formel 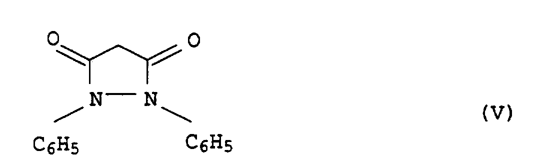 wurden in 20 ml Acetanhydrid für 2 h auf 80°C erhitzt. Nach dem Erkalten wurde der entstandene Niederschlag abgesaugt, mit Methanol gewaschen und bei 50°C unter vermindertem Druck getrocknet. Man erhielt 2,35 g der Verbindung der Formel 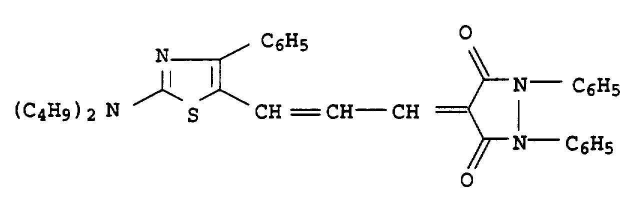 Fp.: 220°C

### Beispiel 4

Man verfuhr analog Beispiel 2, verwendete jedoch anstelle des N-Methylpyridons die entsprechende Menge an N-Hexylpyridon. Man erhielt 3,16 g der Verbindung der Formel

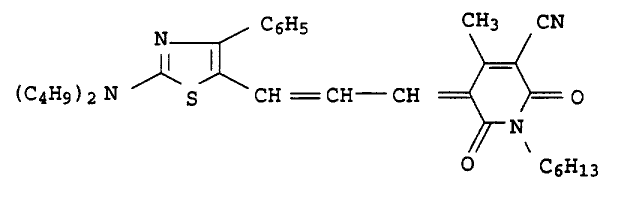

| | | | |
|---|---|---|---|
| ber. | C 70,93 | H 7,58 | N 10,03 |
| gef. | C 70,60 | H 7,50 | N 10,10 |

In analoger Weise werden die in der folgenden Tabelle 1 aufgeführten Verbindungen erhalten.

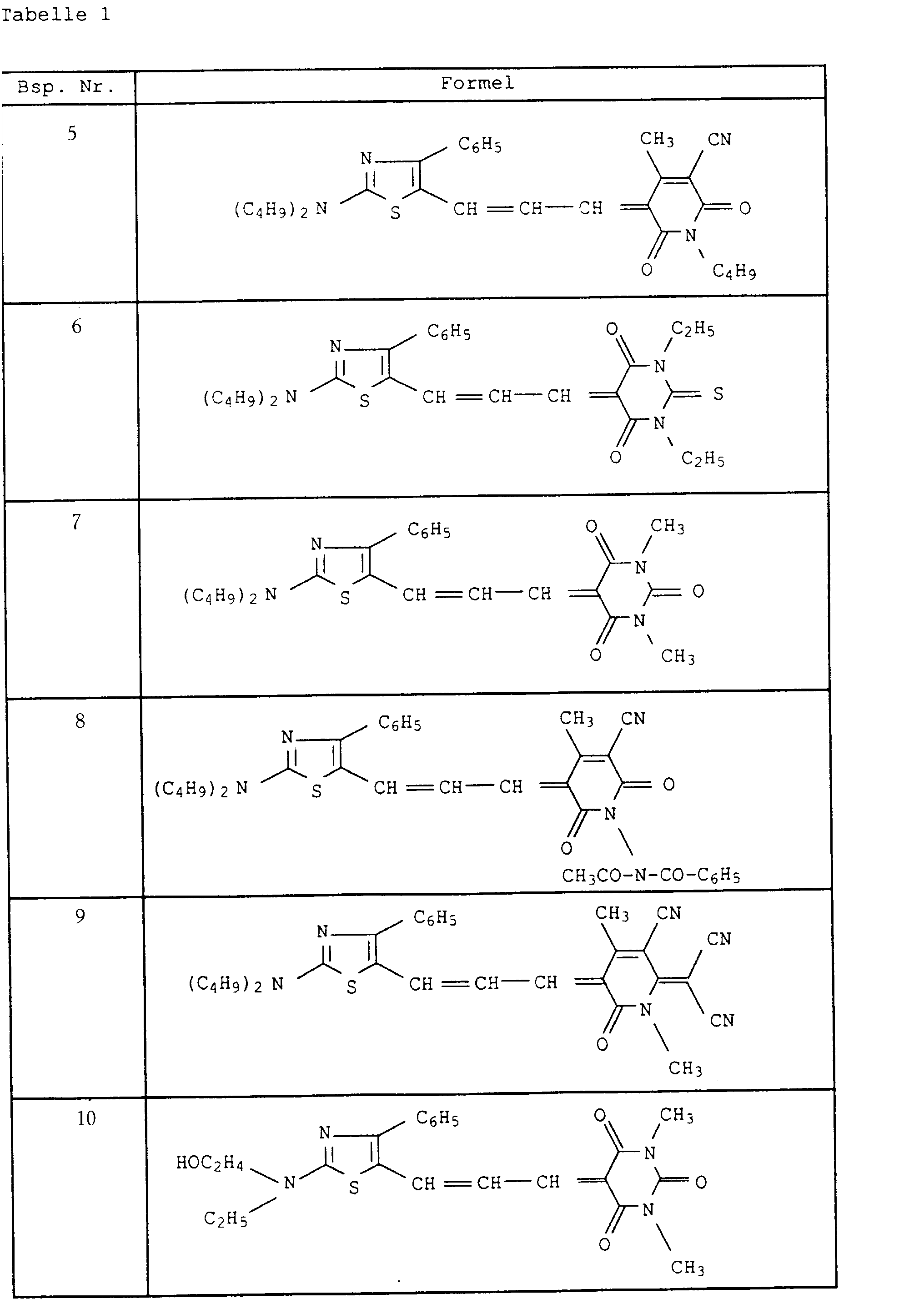

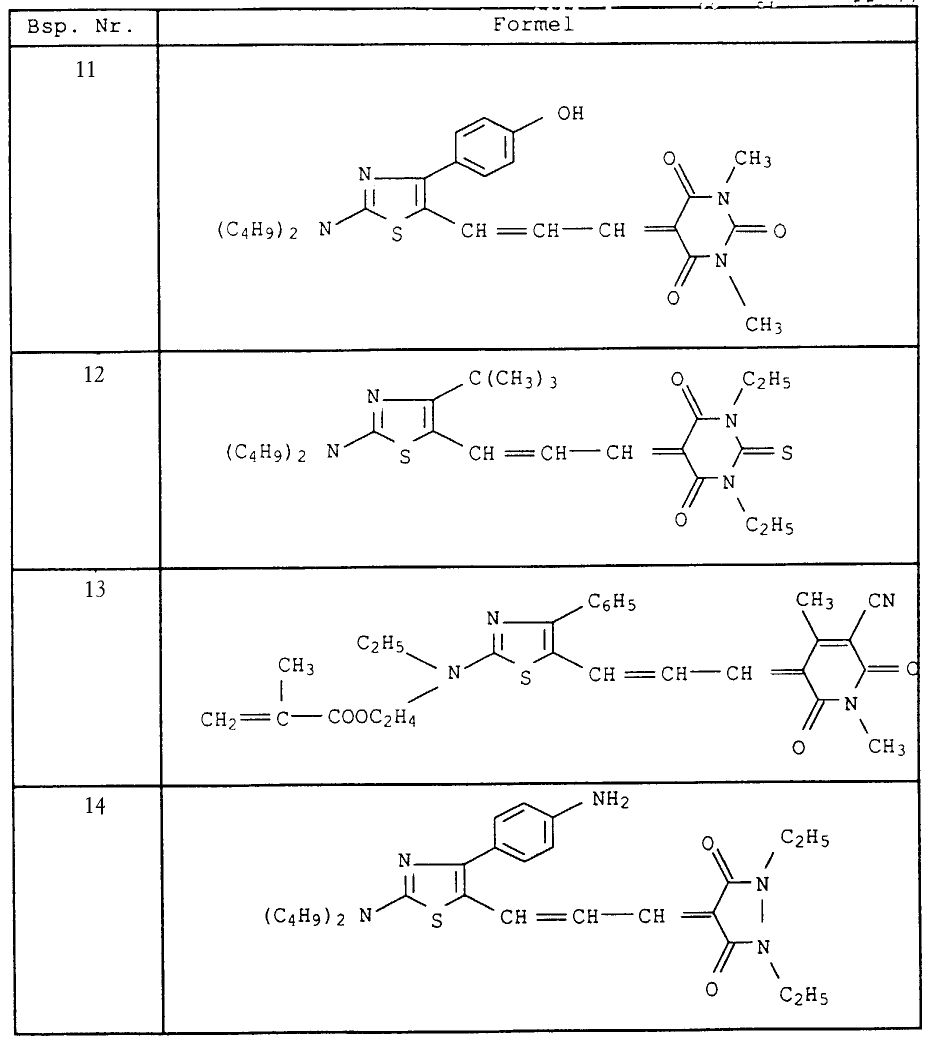

Nach der in Z. Naturforschung, Band 20a, Seiten 1441 bis 1471, 1965, beschriebenen Methode wurde das Absorptionsmaximum der einzelnen Farbstoffe jeweils in Dioxan und Dimethylsulfoxid (DMSO) gemessen und dann die solvatochrome Verschiebung 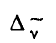 [cm⁻¹] bestimmt.

Die jeweiligen Meßergebnisse sind in der folgenden Tabelle 2 aufgeführt.

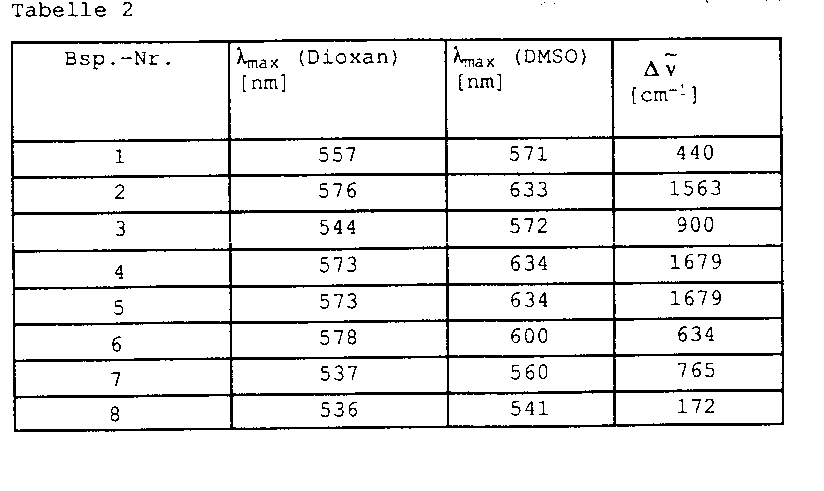

## Patentansprüche

1. Thiazolmethinfarbstoffe der Formel I 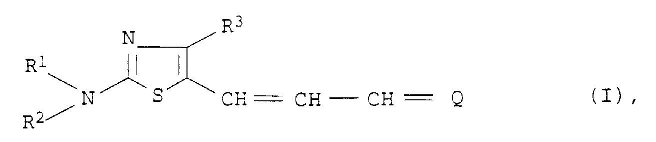 in der
R¹ und R² unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,
R³ für Wasserstoff, Halogen, C₁-C₈-Alkyl, gegebenenfalls substituiertes Phenyl, gegebenenfalls substituiertes Benzyl, Cyclohexyl, Thienyl, Hydroxy oder C₁-C₈-Monoalkylamino und
Q für den Rest einer CH-aciden Verbindung stehen,
ausgenommen der Verbindung der Formel

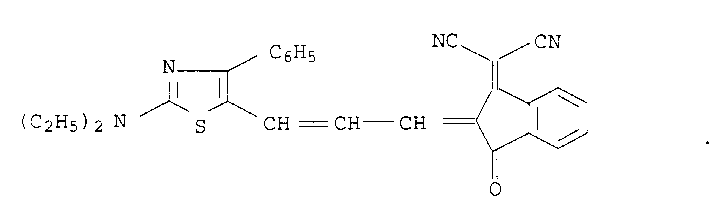

2. Thiazolmethinfarbstoffe nach Anspruch 1, dadurch gekennzeichnet, daß Q sich von Nitromethan, Nitroethan oder von Verbindungen der Formeln IIa bis IIi 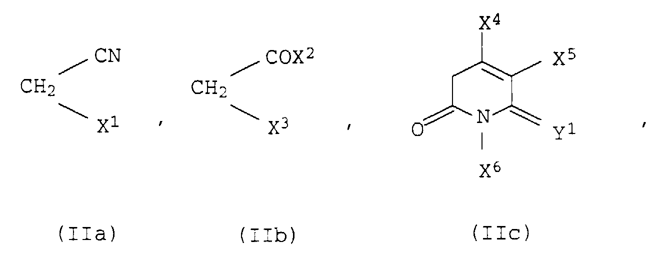 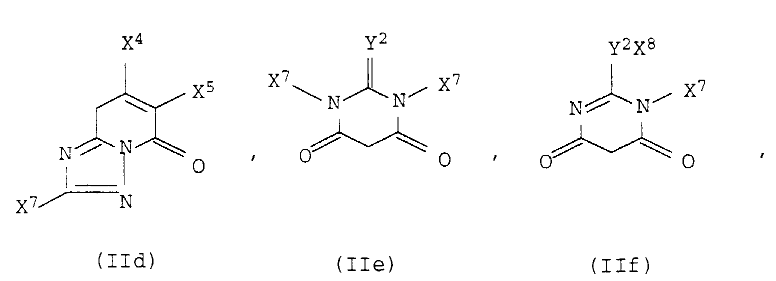 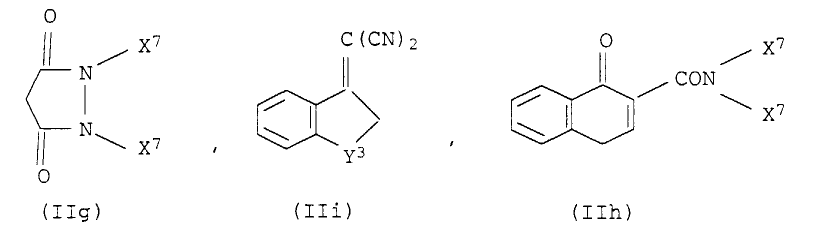 ableitet, wobei
Y¹ Sauerstoff oder einen Rest der Formel C(CN)₂,
Y² Sauerstoff oder Schwefel,
Y³ Sulfonyl oder einen Rest der Formel C(CN)₂,
X¹ Cyano, Nitro, C₁-C₄-Alkanoyl, gegebenenfalls substituiertes Benzoyl, C₁-C₄-Alkylsulfonyl, gegebenenfalls substituiertes Phenylsulfonyl, Carboxyl, C₁-C₄-Alkoxycarbonyl, Phenoxycarbonyl, Carbamoyl, C₁-C₄-Mono- oder Dialkylcarbamoyl, gegegebenenfalls substituiertes Phenylcarbamoyl oder gegebenenfalls substituiertes Phenyl,
X² C₁-C₆-Alkyl oder C₁-C₆-Alkoxy,
X³ C₁-C₄-Alkoxycarbonyl oder Phenylcarbamoyl,
X⁴ Wasserstoff oder C₁-C₆-Alkyl,
X⁵ Cyano, Carbamoyl, C₁-C₄-Alkoxycarbonyl oder Acetyl,
X⁶ Wasserstoff, C₁-C₈-Alkyl, Amino, C₁-C₆-Mono- oder Dialkylamino, C₁-C₄-Monoalkanoylamino, Benzoylamino oder N-(C₁-C₄-Alkanoyl)-N-benzoylamino,
X⁷ wasserstoff, C₁-C₈-Alkyl, Benzyl oder Phenyl und
X⁸ C₁-C₈-Alkyl bedeuten.

3. Thiazolmethinfarbstoffe nach Anspruch 1, dadurch gekennzeichnet, daß R¹ und R² unabhängig voneinander jeweils für C₁-C₆-Alkyl oder durch Hydroxy, Acryloyloxy oder Methacryloyloxy substituiertes C₂-C₆-Alkyl stehen.

4. Thiazolmethinfarbstoffe nach Anspruch 1, dadurch gekennzeichnet, daß R³ für C₁-C₆-Alkyl oder gegebenenfalls substituiertes Phenyl steht.

5. Thiazolmethinfarbstoffe nach Anspruch 1, dadurch gekennzeichnet, daß R¹ für C₁-C₆-Alkyl, Phenyl, Hydroxyphenyl oder Aminophenyl stehen.

6. Verwendung der Thiazolmethinfarbstoffe der Formel I 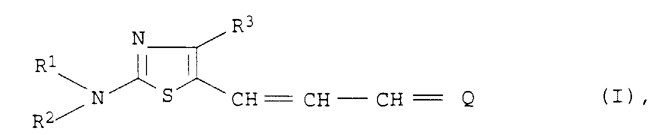 in der
R¹ und R² unabhängig voneinander jeweils für Wasserstoff, C₁-C₈-Alkyl, das gegebenenfalls substituiert ist und durch ein oder zwei Sauerstoffatome in Etherfunktion unterbrochen sein kann, C₃-C₄-Alkenyl, C₅-C₇-Cycloalkyl, Phenyl oder Tolyl oder zusammen mit dem sie verbindenden Stickstoffatom für einen fünf- oder sechsgliedrigen gesättigten heterocyclischen Rest, der gegebenenfalls weitere Heteroatome enthält,
R³ für Wasserstoff, Halogen, C₁-C₈-Alkyl, gegebenenfalls substituiertes Phenyl, gegebenenfalls substituiertes Benzyl, Cyclohexyl, Thienyl, Hydroxy oder C₁-C₈-Monoalkylamino und
Q für den Rest einer CH-aciden Verbindung stehen,
in der nichtlinearen Optik.

## Claims

1. Thiazolemethine dyes of the formula I 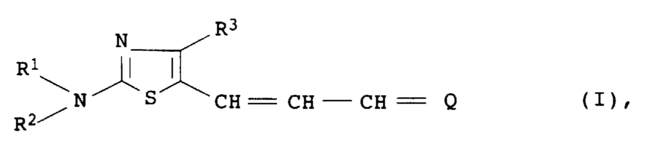 where
R¹ and R² are independently of each other hydrogen, C₁-C₈-alkyl with or without substitution and with or without interruption by one or two oxygen atoms in the ether function, C₃-C₄-alkenyl, C₅-C₇-cycloalkyl, phenyl or tolyl, or are together with the nitrogen atom joining them together a five- or six-membered saturated heterocyclic radical with or without further hetero atoms,
R³ is hydrogen, halogen, C₁-C₈-alkyl, substituted or unsubstituted phenyl, substituted or unsubstituted benzyl, cyclohexyl, thienyl, hydroxyl or C₁-C₈-monoalkylamino, and
Q is the radical of an acidic-CH compound,
excepting the compound of the formula

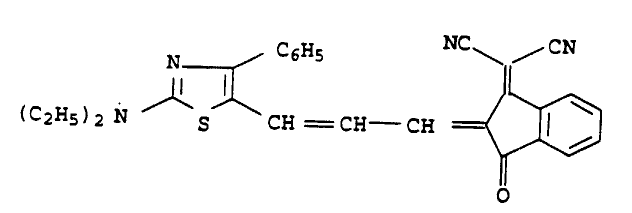

2. Thiazolemethine dyes as claimed in claim 1 wherein Q is derived from nitromethane, nitroethane or from compounds of the formuale IIa to IIi 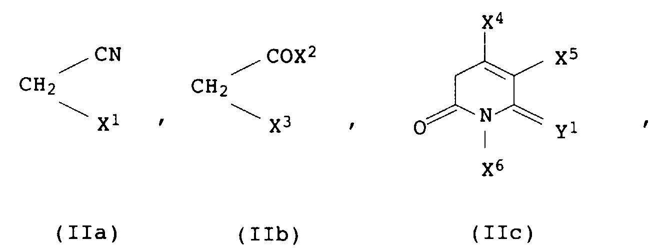 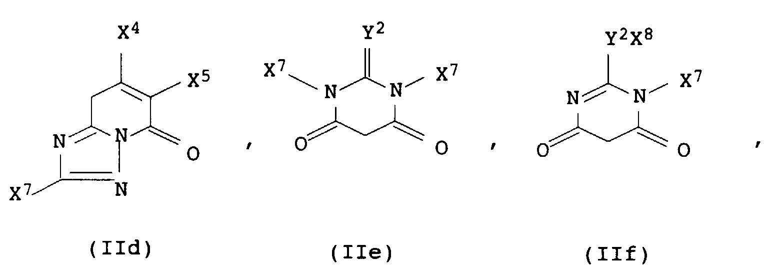 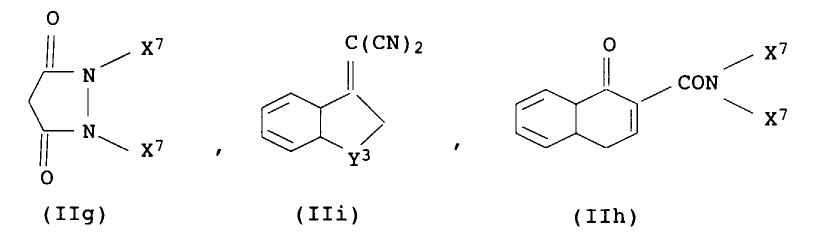 where
Y¹ is oxygen or a radical of the formula C(CN)₂,
Y² is oxygen or sulfur,
Y³ is sulfonyl or a radical of the formula C(CN)₂,
X¹ is cyano, nitro, C₁-C₄-alkanoyl, substituted or unsubstituted benzoyl, C₁-C₄-alkylsulfonyl, substituted or unsubstituted phenylsulfonyl, carboxyl, C₁-C₄-alkoxycarbonyl, phenoxycarbonyl, carbamoyl, C₁-C₄-mono- or dialkylcarbamoyl, substituted or unsubstituted phenylcarbamoyl or substituted or unsubstituted phenyl,
X² is C₁-C₆-alkyl or C₁-C₆-alkoxy,
X³ is C₁-C₄-alkoxycarbonyl or phenylcarbamoyl,
X⁴ is hydrogen or C₁-C₆-alkyl,
X⁵ is cyano, carbamoyl, C₁-C₄-alkoxycarbonyl or acetyl,
X⁶ is hydrogen, C₁-C₈-alkyl, amino, C₁-C₆-mono- or dialkylamino, C₁-C₄-monoalkanoylamino, benzoylamino or N-(C₁-C₄-alkanoyl)-N-benzoylamino,
X⁷ is hydrogen, C₁-C₈-alkyl, benzyl or phenyl, and
X⁸ is C₁-C₈-alkyl.

3. Thiazolemethine dyes as claimed in claim 1 wherein R¹ and R² are independently of each other C₁-C₆-alkyl or hydroxyl-, acryloyloxy- or methacryloyloxy-substituted C₂-C₆-alkyl.

4. Thiazolemethine dyes as claimed in claim 1 wherein R³ is C₁-C₆-alkyl or substituted or unsubstituted phenyl.

5. Thiazolemethine dyes as claimed in claim 1 wherein R³ is C₁-C₆-alkyl, phenyl, hydroxyphenyl or aminophenyl.

6. The use in nonlinear optics of the thiazolemethine dyes of the formula I 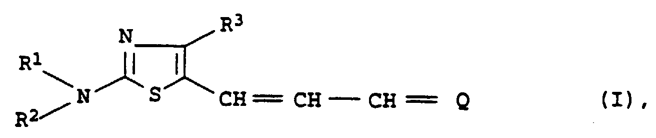 where
R¹ and R² are independently of each other hydrogen, C₁-C₈-alkyl with or without substitution and with or without interruption by one or two oxygen atoms in the ether function, C₃-C₄-alkenyl, C₅-C₇-cycloalkyl, phenyl or tolyl, or are together with the nitrogen atom joining them together a five- or six-membered saturated heterocyclic radical with or without further hetero atoms,
R³ is hydrogen, halogen, C₁-C₈-alkyl, substituted or unsubstituted phenyl, substituted or unsubstituted benzyl, cyclohexyl, thienyl, hydroxyl or C₁-C₈-monoalkylamino, and
Q is the radical of an acidic-CH compound.

## Revendications

1. Colorants thiazolométhiniques de formule I 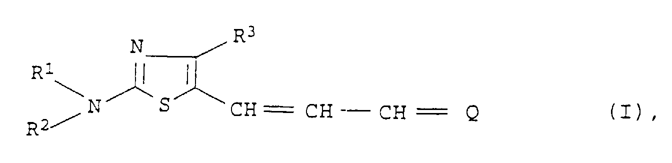 dans laquelle
R¹ et R² sont mis, indépendamment l'un de l'autre, pour un atome d'hydrogène, un groupement alkyle en C₁-C₈, qui est éventuellement substitué et qui peut être interrompu par un ou deux atomes d'oxygène en fonction éther, un groupement alcényle en C₃-C₄, cycloalkyle en C₅-C₇, phényle ou tolyle ou bien, avec l'atome d'azote qui les relie, pour un reste hétérocyclique saturé à 5 ou 6 maillons contenant éventuellement d'autres hétéroatomes,
R³ est mis pour un atome d'hydrogène, d'halogène, un groupement alkyle en C₁-C₈, un groupement phényle éventuellement substitué, un groupement benzyle éventuellement substitué, un groupement cyclohexyle, thiényle, hydroxy ou monoalkylamino en C₁-C₈ et
Q est mis pour le reste d'un composé à CH acide,
à l'exception du composé de formule

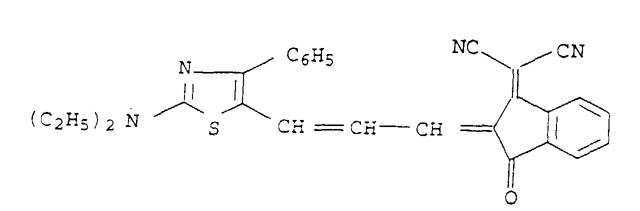

2. Colorants thiazolométhiniques selon la revendication 1, caractérisés en ce que Q dérive du nitrométhane, du nitroéthane ou de composés de formules IIa à IIi 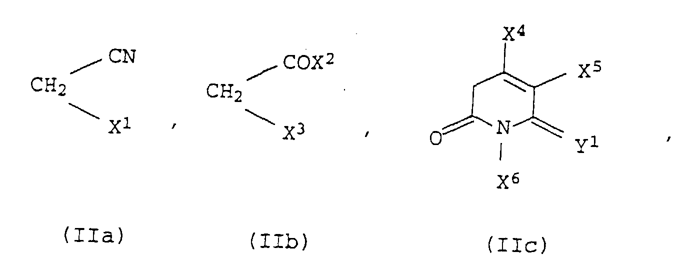 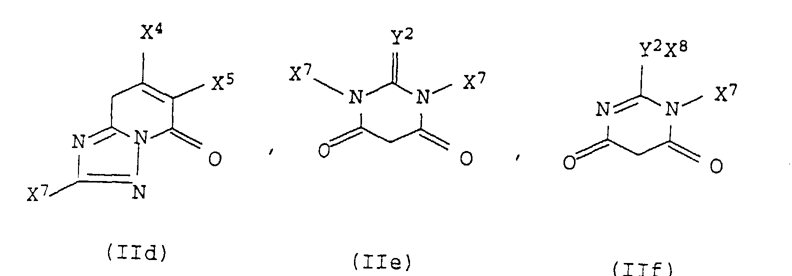 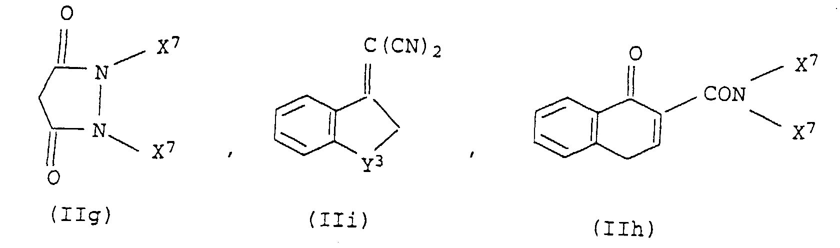 où
Y¹ est mis pour un atome d'oxygène ou un reste de formule C (CN)₂,
Y² est mis pour un atome d'oxygène ou de soufre,
Y³ est mis pour un groupement sulfonyle ou un reste de formule C (CN)₂,
X¹ est mis pour un groupement cyano, nitro, alcanoyle en C₁-C₄, un groupement benzoyle éventuellement substitué, un groupement (alkyle en C₁-C₄)sulfonyle, un groupement phénylsulfonyle éventuellement substitué, un groupement carboxyle, un groupement (alcoxy en C₁-C₄)carbonyle, un groupement phénoxycarbonyle, carbamoyle, mono- ou di(alkyle en C₁-C₄)carbamoyle, un groupement phénylcarbamoyle éventuellement substitué ou un groupement phényle éventuellement substitué,
X² est mis pour un groupement alkyle en C₁-C₆ ou alcoxy en C₁-C₆,
X³ est mis pour un groupement (alcoxy en C₁-C₄)carbonyle ou phénylcarbamoyle,
X⁴ est mis pour un atome d'hydrogène ou un groupement alkyle en C₁-C₆,
X⁵ est mis pour un groupement cyano, carbamoyle, (alcoxy en C₁-C₄)carbonyle ou acétyle,
X⁶ est mis pour un atome d'hydrogène, un groupement alkyle en C₁-C₈, amino, mono- ou di(alkyle en C₁-C₆)amino, mono(alcanoyle en C₁-C₄)amino, benzoylamino ou N-(alcanoyle en C₁-C₄)-N-benzoylamino,
X⁷ est mis pour un atome d'hydrogène, un groupement alkyle en C₁-C₈, benzyle ou phényle et
X⁸ est mis pour un groupement alkyle en C₁-C₈.

3. Colorants thiazolométhiniques selon la revendication 1, caractérisés en ce que R¹ et R² sont mis chacun, indépendamment l'un de l'autre, pour un groupement alkyle en C₁-C₆ ou pour un groupement alkyle en C₂-C₆ substitué par un groupement hydroxy, acryloyloxy ou méthacryloyloxy.

4. Colorants thiazolométhiniques selon la revendication 1, caractérisés en ce que R³ est mis pour un groupement alkyle en C₁-C₆ ou pour un groupement phényle éventuellement substitué.

5. Colorants thiazolométhiniques selon la revendication 1, caractérisés en ce que R³ est mis pour un groupement alkyle en C₁-C₆, phényle, hydroxyphényle ou aminophényle.

6. Utilisation en optique non-linéaire de colorants thiazolométhiniques de formule I 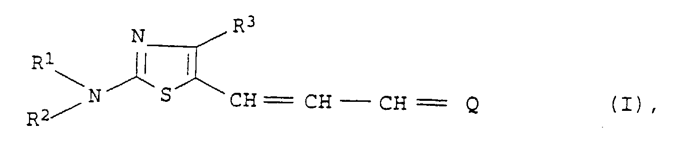 dans laquelle
R¹ et R² sont mis, indépendamment l'un de l'autre, pour un atome d'hydrogène, un groupement alkyle en C₁-C₆, qui est éventuellement substitué et qui peut être interrompu par un ou deux atomes d'oxygène en fonction éther, un groupement alcényle en C₃-C₄, cycloalkyle en C₅-C₇, phényle ou tolyle ou bien, avec l'atome d'azote qui les relie, pour un reste hétérocyclique saturé à 5 ou 6 maillons contenant éventuellement d'autres hétéroatomes,
R³ est mis pour un atome d'hydrogène, d'halogène, un groupement alkyle en C₁-C₈, un groupement phényle éventuellement substitué, un groupement benzyle éventuellement substitué, un groupement cyclohexyle, thiényle, hydroxy ou monoalkylamino en C₁-C₈ et
Q est mis pour le reste d'un composé à CH acide.
